# EUROPEAN PATENT SPECIFICATION

(11) **EP 2 571 144 B1**
(45) Date of publication and mention of the grant of the patent: **08.01.2014**
(21) Application number: 12182888.3
(22) Date of filing: 04.09.2012
(51) Int. Cl.: H02K 3/50

(54) **Electric connector**
Elektrischer Verbinder
Connecteur électrique

(30) Priority: 13.09.2011 EP 11181046
(43) Date of publication of application: 20.03.2013
(73) Proprietor: Alstom Technology Ltd, 5400 Baden (CH)
(72) Inventor: Stallone, Francesco, 6600 Locarno (CH); Safari Zadeh, Hossein, 5504 Othmarsingen (CH); Ballos, Konstantinos, 5012 Schönenwerd (CH); Kuhn, Marcel, 5506 Mägenwil (CH)

(56) References cited:
- US-A- 5 736 670
- US-B1- 6 649 826
- US-B1- 6 948 939

## Description

### TECHNICAL FIELD

The present invention relates to electric connectors, in particular the electric connectors are adapted to be used in electric machines (in particular high power, high voltage electric machines) such as electric generators. For example the electric machines can be synchronous turbogenerators (i.e. generators adapted to be connected to a gas or steam turbine).

### BACKGROUND

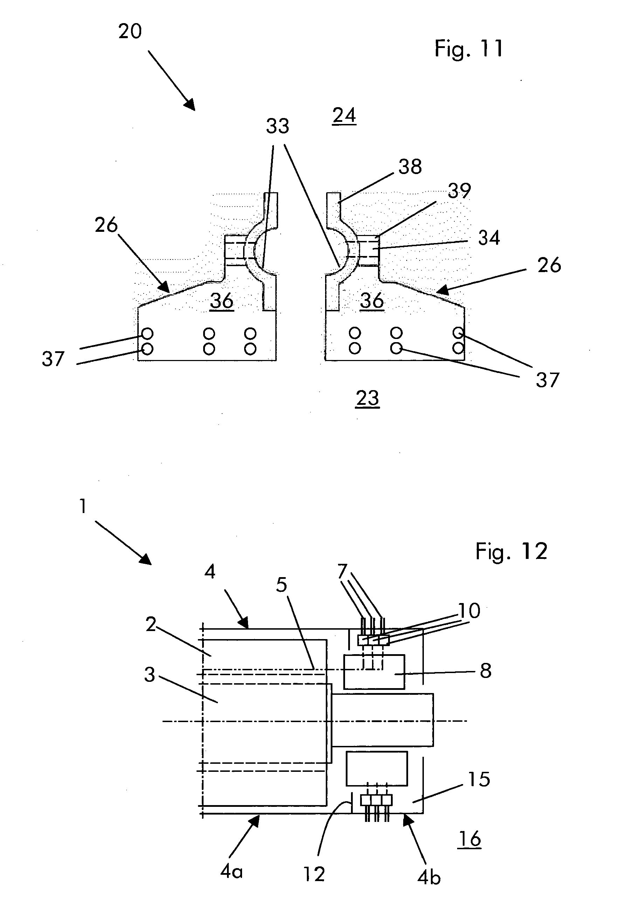

With reference to figure 12, electric machines 1 have a stator 2 and a rotor 3 both housed in a casing 4.

The stator 2 has windings 5 connected to bushings 7 penetrating the casing 4.

The windings 5 are connected to the bushings 7 via phase rings 8 and electric connectors 10.

Traditional electric connectors 10 have an annular body with electric connections (for the windings) symmetrically projecting from the whole circumference of the same body.

These connectors proved to be effective during use.

Nevertheless, new electric machines have an increased power and increased voltage when compared to older electric machines; for this reason the electric distances (i.e. the minimum distance between components having different voltage) must be increased.

This problem proved to be very troubling for the electric connectors, because of the limited space available in the area around them.

As shown in figure 12, the casing is made of a central casing 4a that houses the stator 2 and rotor 3, and two end casings 4b connected at its two ends; one of these end casings 4b houses the phase rings 8 and bushings 7.

The central casing 4a and end casings 4b are separated by a wall 12 that is usually close to the electric connectors 10.

When trying to increase the voltage (and power) of the electric machines, it is often troubling for the known electric connectors 10 and wall 12 to comply with the increased electric distance between them.

Document US 5 736 670 discloses an electrical connector according to the preamble of claim 1.

### SUMMARY

An aspect of the present invention thus includes providing electric connectors by which the increased electric distances between the electric connectors and wall can be complied with.

This and further aspects are attained by providing an electric connector in accordance with the accompanying claims.

### BRIEF DESCRIPTION OF THE DRAWINGS

Further characteristics and advantages of the invention will be more apparent from the description of a preferred but non-exclusive embodiment of the electric connector, illustrated by way of non-limiting example in the accompanying drawings, in which:
Figure 1 is a schematic view of phase rings connected to electric connectors;
Figure 2 shows an electric connector connected to a bushing;
Figures 3-6 show: a perspective view (figure 3), a top view (figure 4), an exploded view (figure 5) and a side view (figure 6) of a connector in an embodiment of the invention;

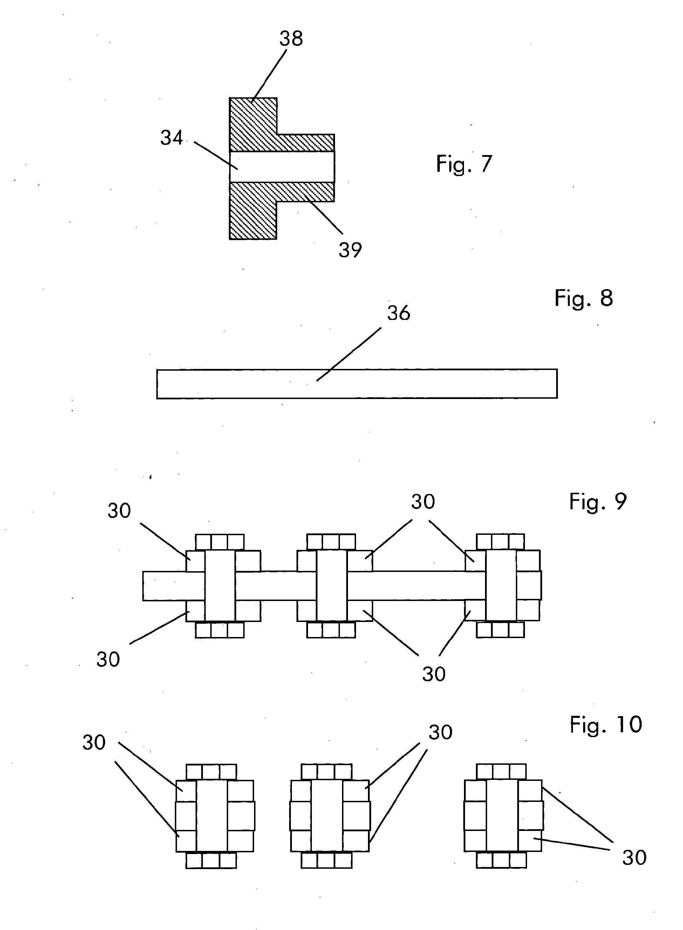

Figures 7, 8, 9, 10 show cross sections through lines VII-VII, VIII-VIII, IX-IX and X-X of figure 5,
Figure 11 shows a top view of a body of the electric connector; and
Figure 12 schematically shows a portion of an electric machine.

### DETAILED DESCRIPTION OF EMBODIMENTS OF THE INVENTION

In the following reference to a rotating electric machine such as a synchronous generator is made, it is anyhow clear that the electric machine can also be a different rotating electric machine such as an asynchronous generator, an electric motor, etc.

In addition reference to the numbers already used above for equal or similar elements is made.

The electric machine 1 has a casing 4 housing a stator 2 and a rotor 3. The casing 4 has bushings 7 passing through it to connect the inside 15 to the outside 16 of the casing 4.

Each bushing 7 is connected to an electric connector 10 that is in turn connected to a stator winding 5.

The electric connectors 10 comprise a body 20 with electric connections 21.

The body 20 has a first side 23 and a second side 24 that is preferably opposite the first side 23. The electric connections 21 extend from the first side 23 and do not extend from the second side 24.

The body 20 includes two symmetrical elements 26 (they are preferably equal) and each element 26 has the same number of electric connections 21 (for example in the attached figures each element 26 has three electric connections 21).

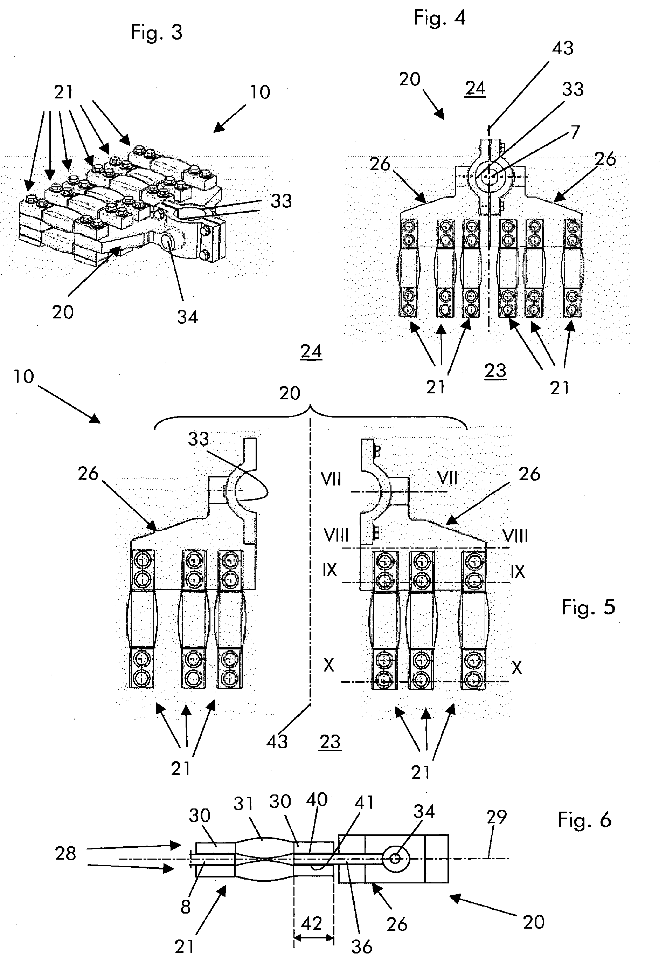

Each electric connection 21 comprises a plurality of components 28 (in the examples shown they are two in number, figure 6); the components 28 are symmetrically connected to the body 20 (for example they are symmetrical with respect to a longitudinal plane 29).

Advantageously the symmetry above described improves the transmission of electric power and reduces electric losses and thus heating.

The components 28 of each electric connection 21 are preferably equal.

Each element 26 of the body 20 has opposite surfaces 40, 41; each of the components 28 of each electric connection 21 is connected to one of the two opposite surfaces 40 or 41.

In particular, the components 28 are connected at overlapping zones 42.

Each component has two plates 30 to be connected to one element 26 and to a phase ring 8; these two plates 30 are reciprocally connected by a flexible element 31 (to adjust possible misalignments).

Each element 26 has a seat 33 for the connection of a support (the support is a part of a bushing 7); the seats 33 have cooling apertures 34 connecting the inside of the seat 33 to the outside thereof.

In an exemplary embodiment, each element 26 has a plate 36 with holes 37 for the connections of the electric connections 21 via bolts; the plate 36 is connected to a block 38 having the seat 33; from the block 38 a protruding element 39 extends. The cooling apertures 34 are provided through the block 38 and protruding element 39.

The electric connections 21 are symmetrically connected to each element 26 of the body 20 with respect to a longitudinal axis 43 of the body 20, for example the longitudinal axis 43 is a symmetry axis of the body 20.

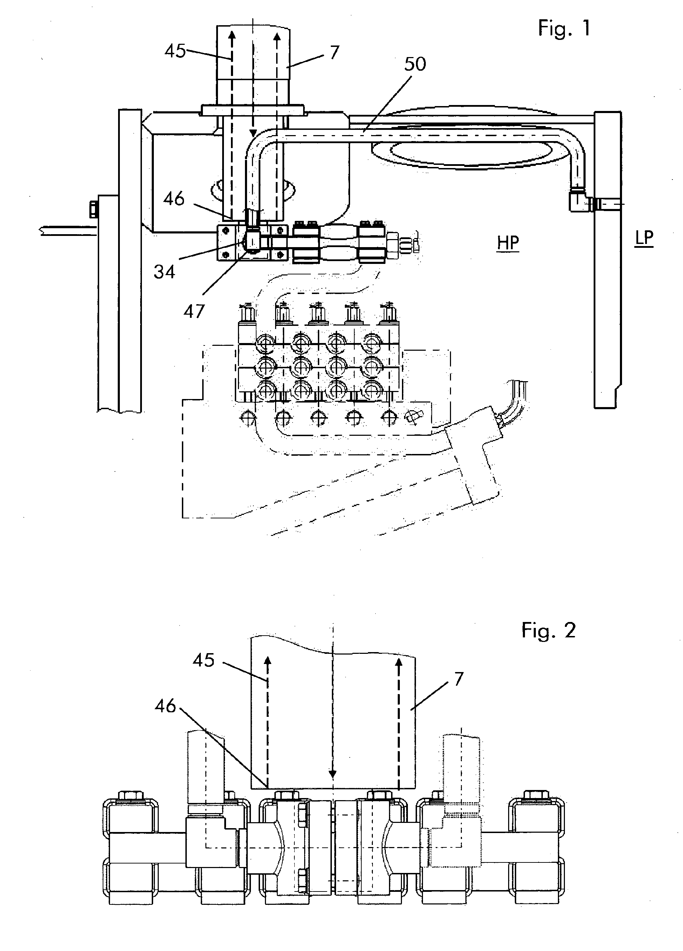

With particular reference to figure 1, the bushings 7 have cooling paths 45 (i.e. a path through with a cooling medium passes through); this cooling path 45 has entrance mouths 46 and exit mouths 47 for the cooling medium.

Advantageously, the cooling apertures 34 of the seats 33 are connected to the exit mouths 47 of the bushing cooling paths 45. This allows a large cooling of the body 20.

In particular, the cooling apertures 34 can be directly connected to the exit mouths 47 of the bushing cooling paths 45 (i.e. no other components are provided between them).

The electric connectors 10 (i.e. all its elements and components) are made out of an electrically conductive material such as a metal; for example copper or aluminium or combinations thereof can be used.

The operation of the electric connector is substantially the following.

The phase rings 8 are housed within the electric machine 1 in a zone HP at higher pressure when compared to a different zone LP at lower pressure thereof.

The phase rings 8 transfer electric power from the windings 5 to the electric connectors 10 that, in turn, transfer electric power to the bushings 7. The electric power is thus supplied to the outside 16 of the casing 4 via the bushings 7.

In the zone HP the bushings 7 are housed (partly housed because a part thereof protrude from the casing 4; the entrance mouths 46 open in the zone HP).

The cooling medium enters the bushing cooling paths 45 via the mouths 46 and passes through them; then the cooling medium passes via the mouths 47 into the apertures 34 of the seats 33 to cool also the body 20 of the electric connectors 10. The apertures 34 are connected to Teflon pipes 50 in turn connected to the LP zone. The differential pressure between the zone HP and zone LP allows cooling medium circulation.

Since the electric connections 21 do not extend from at least one side of the electric connectors 10 (in particular no electric connections 21 extend from the side 24 of the body 20), it is possible to arrange the connectors 10 such that the side 24 faces the wall 12 (and the side 23 or possible other sides with electric connections 21 face away from the wall 12). This way the electric connections 21 face away from the wall 12, and the connectors 10 can be arranged in such a way as to comply with large electric distances also in reduced spaces.

In practice the materials used and the dimensions can be chosen at will according to requirements and to the state of the art.

### REFERENCE NUMBERS

1 electric machine
2 stator
3 rotor
4 casing
4a central casing
4b end casing
5 winding
7 bushing
8 phase ring
10 electric connector
12 wall
15 inside of 4
16 outside of 4
20 body of 10
21 electric connection of 10
23 first side of 20
24 second side of 20
26 element of 20
28 component of 21
29 longitudinal plane of 20
30 plate of 28
31 flexible element of 28
33 seat of 26
34 cooling aperture of 33
36 plate of 26 37 holes of 36
38 block of 26
39 protruding element of 26
40 surface of 26
41 surface of 26
42 overlapping zones
43 longitudinal symmetry axis 20
45 cooling path of 7
46 entrance mouth of 45
47 exit mouth of 45
50 Teflon pipe

## Claims

1. Electric connector (10) comprising a body (20) with electric connections (21), **characterised in that**:
- the body (20) has a first side (23) and a second side (24), wherein the electric connections (21) extend from the first side (23) and do not extend from the second side (24),
- the body (20) includes two symmetrical elements (26),
- each element (26) has the same number of electric connections (21),
- each electric connection (21) comprises a plurality of components (28) that are symmetrically connected to the body (20)
- **characterised in that** each element (26) has a seat (33) for the connection of a support and **in that**
- each seat (33) has cooling apertures (34) connecting the inside of the seat (33) to the outside thereof.

2. Electric connector (10) according to claim 1, **characterised in that** the electric connections (21) are symmetrically connected to each element (26) of the body (20) with respect to a longitudinal axis (43) of the body (20).

3. Electric connector (10) according to claim 1, **characterised in that** each element (26) of the body (20) has opposite surfaces (40, 41), wherein each of the components (28) of each electric connection (21) is connected to one of the two opposite surfaces (40, 41).

4. Electric connector (10) according to claim 3, **characterised in that** the components (28) of each electric connection (21) are connected at overlapping zones (42).

5. Electric connector (10) according to claim 1, **characterised in that** the second side (24) of the body (20) is opposite the first side (23) thereof.

6. Electric machine (1) with a casing (4) housing a stator (2) and a rotor (3), the casing (4) having bushings (7) passing through it to connect the inside (15) to the outside (16) thereof, each bushing (7) being connected to an electric connector (10) according to claim 1, whereby the connector (10) is in turn connected to stator winding.

7. Electric machine (1) according to claim 6, **characterised in that** each element (26) has a seat (33) for the connection of a bushing (7).

8. Electric machine (1) according to claim 6, **characterised in that** each seat (33) has cooling apertures (34) connecting the inside of the seat (33) to the outside thereof.

9. Electric machine (1) according to claim 7, **characterised in that**:
- the bushings (7) have cooling paths (45) with entrance mouths (46) and exit mouths (47) for a cooling medium,
- the seats (33) have cooling apertures (34) connecting the inside of each seat (33) to the outside thereof,
- wherein the cooling apertures (34) of the seats (33) are connected to the exit mouths (47) of the bushing cooling paths (45).

10. Electric machine (1) according to claim 9, **characterised in that** the cooling apertures (34) are directly connected to the exit mouths (47) of the bushing cooling paths (45).

11. Electric machine (1) according to claim 6, **characterised in that** the second side (24) of the body (20) is opposite the first side (23) thereof.

## Patentansprüche

1. Elektrischer Verbinder (10), der einen Körper (20) mit elektrischen Anschlüssen (21) umfasst, **dadurch gekennzeichnet, dass**
- der Körper (20) eine erste Seite (23) und eine zweite Seite (24) hat, wobei die elektrischen Anschlüsse (21) sich von der ersten Seite (23) aus erstrecken und sich nicht von der zweiten Seite (24) aus erstrecken,
- der Körper (20) zwei symmetrische Elemente (26) umfasst,
- jedes Element (26) dieselbe Zahl von elektrischen Anschlüssen (21) hat,
- jeder elektrische Anschluss (21) mehrere Komponenten (28) umfasst, die symmetrisch mit dem Körper (20) verbunden sind,
**dadurch gekennzeichnet, dass** jedes Element (26) eine Aufnahme (33) für den Anschluss einer Stütze hat, und dadurch, dass
- jede Aufnahme (33) Kühlöffnungen (34) hat, die das Innere der Aufnahme (33) mit dessen Äußerem verbinden.

2. Elektrischer Verbinder (10) nach Anspruch 1, **dadurch gekennzeichnet, dass** die elektrischen Anschlüsse (21) symmetrisch zu einer Längsachse (43) des Körpers (20) mit jedem Element (26) des Körpers (20) verbunden sind.

3. Elektrischer Verbinder (10) nach Anspruch 1, **dadurch gekennzeichnet, dass** jedes Element (26) des Körpers (20) entgegengesetzte Flächen (40, 41) hat, wobei jede der Komponenten (28) jedes elektrischen Anschlusses (21) mit einer der zwei entgegengesetzten Flächen (40, 41) verbunden ist.

4. Elektrischer Verbinder (10) nach Anspruch 3, **dadurch gekennzeichnet, dass** die Komponenten (28) jedes elektrischen Anschlusses (21) in sich überlappenden Bereichen (42) verbunden sind.

5. Elektrischer Verbinder (10) nach Anspruch 1, **dadurch gekennzeichnet, dass** die zweite Seite (24) des Körpers (20) der ersten Seite (23) desselben gegenüberliegt.

6. Elektrische Maschine (1) mit einem Gehäuse (4), das einen Stator (2) und einen Rotor (3) aufnimmt, wobei das Gehäuse (4) Durchführungen (7) hat, die durch dasselbe führen, um die Innenseite (15) mit der Außenseite (16) desselben zu verbinden, wobei jede Durchführung (7) mit einem elektrischen Verbinder (10) nach Anspruch 1 verbunden ist, wodurch der Verbinder (10) wiederum mit einer Statorwicklung verbunden ist.

7. Elektrische Maschine (1) nach Anspruch 6, **dadurch gekennzeichnet, dass** jedes Element (26) eine Aufnahme (33) für den Anschluss einer Durchführung (7) hat.

8. Elektrische Maschine (1) nach Anspruch 6, **dadurch gekennzeichnet, dass** jede Aufnahme (33) Kühlöffnungen (34) hat, die die Innenseite der Aufnahme (33) mit der Außenseite desselben verbinden.

9. Elektrische Maschine (1) nach Anspruch 7, **dadurch gekennzeichnet, dass**
- die Durchführungen (7) Kühlwege (45) mit Einmündungen (46) und Ausmündungen (47) für ein Kühlmittel haben,
- die Sitze (33) Kühlöffnungen (34) haben, die die Innenseite jeder Aufnahme (33) mit der Außenseite desselben verbinden,
- wobei die Kühlöffnungen (34) der Aufnahmen (33) mit den Ausmündungen (47) der Durchführungskühlwege (45) verbunden sind.

10. Elektrische Maschine (1) nach Anspruch 9, **dadurch gekennzeichnet, dass** die Kühlöffnungen (34) direkt mit den Ausmündungen (47) der Durchführungskühlwege (45) verbunden sind.

11. Elektrische Maschine (1) nach Anspruch 6, **dadurch gekennzeichnet, dass** die zweite Seite (24) des Körpers (20) der ersten Seite (23) desselben gegenüberliegt.

## Revendications

1. Connecteur électrique (10) comprenant un corps (20) avec des connexions électriques (21), **caractérisé en ce que** :
- le corps (20) présente un premier côté (23) et un deuxième côté (24), les connexions électriques (21) s'étendant depuis le premier côté (23) et ne s'étendant pas depuis le deuxième côté (24),
- le corps (20) comporte deux éléments symétriques (26),
- chaque élément (26) présente le même nombre de connexions électriques (21),
- chaque connexion électrique (21) comprend une pluralité de composants (28) qui sont connectés de manière symétrique par rapport au corps (20),
- **caractérisé en ce que** chaque élément (26) présente un siège (33) pour la connexion d'un support et **en ce que**
- chaque siège (33) présente des ouvertures de refroidissement (34) reliant l'intérieur du siège (33) à l'extérieur de celui-ci.

2. Connecteur électrique (10) selon la revendication 1, **caractérisé en ce que** les connexions électriques (21) sont connectées de manière symétrique à chaque élément (26) du corps (20) par rapport à un axe longitudinal (43) du corps (20).

3. Connecteur électrique (10) selon la revendication 1, **caractérisé en ce que** chaque élément (26) du corps (20) présente des surfaces opposées (40, 41), chacun des composants (28) de chaque connexion électrique (21) étant connecté à l'une des deux surfaces opposées (40, 41).

4. Connecteur électrique (10) selon la revendication 3, **caractérisé en ce que** les composants (28) de chaque connexion électrique (21) sont connectés au niveau de zones se chevauchant (42).

5. Connecteur électrique (10) selon la revendication 1, **caractérisé en ce que** le deuxième côté (24) du corps (20) est opposé au premier côté (23) de celui-ci.

6. Machine électrique (1) comprenant un carter (4) recevant un stator (2) et un rotor (3), le carter (4) présentant des douilles (7) traversant celui-ci de manière à relier l'intérieur (15) à l'extérieur (16) de celui-ci, chaque douille (7) étant connectée à un connecteur électrique (10) selon la revendication 1, le connecteur (10) étant à son tour connecté à un enroulement statorique.

7. Machine électrique (1) selon la revendication 6, **caractérisée en ce que** chaque élément (26) présente un siège (33) pour la connexion d'une douille (7).

8. Machine électrique (1) selon la revendication 6, **caractérisée en ce que** chaque siège (33) présente des ouvertures de refroidissement (34) reliant l'intérieur du siège (33) à l'extérieur de celui-ci.

9. Machine électrique (1) selon la revendication 7, **caractérisée en ce que** :
- les douilles (7) présentent des chemins de refroidissement (45) avec des embouchures d'entrée (46) et des embouchures de sortie (47) pour un milieu de refroidissement,
- les sièges (33) présentent des ouvertures de refroidissement (34) reliant l'intérieur de chaque siège (33) à l'extérieur de celui-ci,
- les ouvertures de refroidissement (34) des sièges (33) étant reliées aux embouchures de sortie (47) des chemins de refroidissement des douilles (45).

10. Machine électrique (1) selon la revendication 9, **caractérisée en ce que** les ouvertures de refroidissement (34) sont reliées directement aux embouchures de sortie (47) des chemins de refroidissement des douilles (45).

11. Machine électrique (1) selon la revendication 6, **caractérisée en ce que** le deuxième côté (24) du corps (20) est opposé au premier côté (23) de celui-ci.
